(19) **Europäisches Patentamt / European Patent Office / Office européen des brevets**

(11) **EP 4 773 457 A1**

(12) # EUROPEAN PATENT APPLICATION

(43) Date of publication:
08.07.2026 Bulletin 2026/28

(21) Application number: 25225820.7

(22) Date of filing: 19.12.2025

(51) International Patent Classification (IPC):
*H02J 3/32* (2026.01)

(52) Cooperative Patent Classification (CPC):
**H02J 3/32;** H02J 3/40; H02J 3/48

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 02.01.2025 US 202563741228 P

(71) Applicant: Magna International Inc.
Aurora, ON L4G 7K1 (CA)

(72) Inventors:
• **Amezyane, Ibrahim**
**AURORA, ONTARIO, L4G 7K1 (CA)**
• **Viana, Caniggia**
**AURORA, ONTARIO, L4G 7K1 (CA)**
• **Zuo, Ying**
**AURORA, ONTARIO, L4G 7K1 (CA)**
• **Lewoc, Philip**
**AURORA, ONTARIO, L4G 7K1 (CA)**
• **Kar, Narayan C.**
**AURORA, ONTARIO, L4G 7K1 (CA)**

(74) Representative: **Witte, Weller & Partner**
**Patentanwälte mbB**
**Postfach 10 54 62**
**70047 Stuttgart (DE)**

(54) **SYSTEM AND METHOD FOR A DC/AC POWER CONVERTER WITH VOLTAGE ESTIMATION**

(57)　A method of operating a power converter (10) for exchanging power with an alternating current (AC) grid (30) includes: commanding one or more switches to selectively conduct a current between a DC storage device (20) and the AC grid (30) via a series combination of a resistor and an inductor; measuring a current through the series combination of the resistor and the inductor; and determining, based on the measured current, an estimated grid voltage of the AC grid (30). The one or more switches are commanded based on the estimated grid voltage. The power converter (10) is operated in each of: a pre-synchronous mode before energy is exchanged between the DC storage device (20) and the AC grid (30), and a post-synchronous mode while energy is exchanged between the DC storage device (20) and the AC grid (30). Different techniques are used to determine the estimated grid voltage in the pre-synchronous mode and in the post-synchronous mode.

**FIG. 1**

EP 4 773 457 A1

## Description

### FIELD

The present disclosure relates generally to a grid-connected power converter. More specifically, the present application relates to a power converter configured for estimating a grid voltage using a switched-impedance (SWZ).

### BACKGROUND

In grid-connected applications, DC sources, such as batteries or capacitors, use inverters to exchange power with the grid. Power flow control may rely on synchronizing the inverter output voltage with the grid. A voltage sensor is typically used to achieve synchronization, increasing the cost and points of failure in the system.

### SUMMARY

The present disclosure provides a method of operating a power converter for exchanging power with an alternating current (AC) grid. The method includes: commanding one or more switches to selectively conduct a current between a DC storage device and the AC grid via a series combination of a resistor and an inductor; measuring a measured current through the series combination of the resistor and the inductor; and determining, based on the measured current, an estimated grid voltage of the AC grid. Commanding the one or more switches to selectively conduct the current is based on the estimated grid voltage. Commanding the one or more switches to selectively conduct the current includes operating the power converter in each of: a pre-synchronous mode before energy is exchanged between the DC storage device and the AC grid, and a post-synchronous mode while energy is exchanged between the DC storage device and the AC grid. Determining the estimated grid voltage of the AC grid includes using a first technique to determine the estimated grid voltage while operating the power converter in the pre-synchronous mode. Determining the estimated grid voltage of the AC grid includes using a second technique, different from the first technique, to determine the estimated grid voltage while operating the power converter in the post-synchronous mode.

The present disclosure also provides a power converter system for exchanging power between a direct current (DC) storage device and an alternating current (AC) grid. The power converter includes: a series combination of a resistor and an inductor connected to the AC grid; an inverter including one or more switches configured to selectively conduct a current between the DC storage device and the AC grid via the series combination of a resistor and an inductor; a current sensor configured to determine a measured current through the series combination of the resistor and the inductor; and a controller. The controller is configured to: determine, based on the measured current, an estimated grid voltage of the AC grid; and command the one or more switches of the inverter to selectively conduct the current based on the estimated grid voltage and by operating the power converter in each of: a pre-synchronous mode before energy is exchanged between the DC storage device and the AC grid, and a post-synchronous mode while energy is exchanged between the DC storage device and the AC grid. Determining the estimated grid voltage of the AC grid includes the controller using a first technique to determine the estimated grid voltage while operating the power converter in the pre-synchronous mode. Determining the estimated grid voltage of the AC grid also includes the controller using a second technique, different from the first technique, to determine the estimated grid voltage while operating the power converter in the post-synchronous mode.

These and other aspects of the present disclosure are disclosed in the following detailed description of the embodiments, the appended claims, and the accompanying figures

### BRIEF DESCRIPTION OF THE DRAWINGS

Further details, features and advantages of designs of the invention result from the following description of embodiment examples in reference to the associated drawings.

FIG. 1 is a schematic diagram illustrating a conventional single-phase grid-connected inverter with current and voltage sensing.

FIG. 2 shows a schematic block diagram of a conventional dq control scheme for grid-connected inverter with cross-axis decoupling, including feed-forward voltage measurement.

FIG. 3 shows an electrical schematic of a converter circuit with a half-bridge topology.

FIGs. 4A - 4C each show electrical schematics of the converter circuit of FIG. 3 and representing three different states in a switched-impedance (SWZ) cycle.

FIG. 5 shows a graph illustrating time-domain solutions of the SWZ states with an upper plot highlighting the merged current path in one period.

FIG. 6 shows a graph illustrating Maximum duty cycle allowed for SWZ operation vs voltage ratio and for different factor values.

FIG. 7 shows an electrical schematic of a full-bridge grid-connected converter circuit.

FIG. 8 shows a graph illustrating a current waveform during SWZ operation vs period.

FIG. 9 shows graphs of current and voltage on a common angular position scale, over a single period, and representing simulation results for SWZ pulsing.

FIG. 10 shows an electrical schematic of a simplified grid-connected converter circuit for control system design.

FIG. 11A shows a schematic diagram representing a disturbance observer used in the post-synchronous stage, and in a simple original form.

FIG. 11B shows a schematic diagram representing the disturbance observer used in the post-synchronous stage, and with a remodeled observer to be adapted digitally.

FIG. 11C shows a schematic diagram representing the disturbance observer with integrated SWZ mode and which is used in the post-synchronous stage.

FIG. 12 shows a flow chart illustrating steps in a first method for modeling operation of a power converter for exchanging power with an alternating current (AC) grid.

FIG. 13 shows a flow chart listing steps in a second method for operating a power converter for exchanging power with an alternating current (AC) grid.

## DETAILED DESCRIPTION

Referring to the drawings, the present invention will be described in detail in view of following embodiments.

The present disclosure provides a method for grid tracking using conventional current sensing without a voltage sensor, providing a cost-effective and fail-safe alternative. The method of the present disclosure is partitioned into pre-synchronous and post-synchronous control stages. In the pre-synchronous stage, the inverter is operated in discontinuous conduction mode to magnify the impedance of the grid-connected circuit and create a deterministic relationship between current and grid voltage. In the post-synchronous stage, output regulation via a disturbance observer is used to keep track of the grid. The present disclosure also demonstrates, using computer simulations, the method with a full-bridge single-phase application.

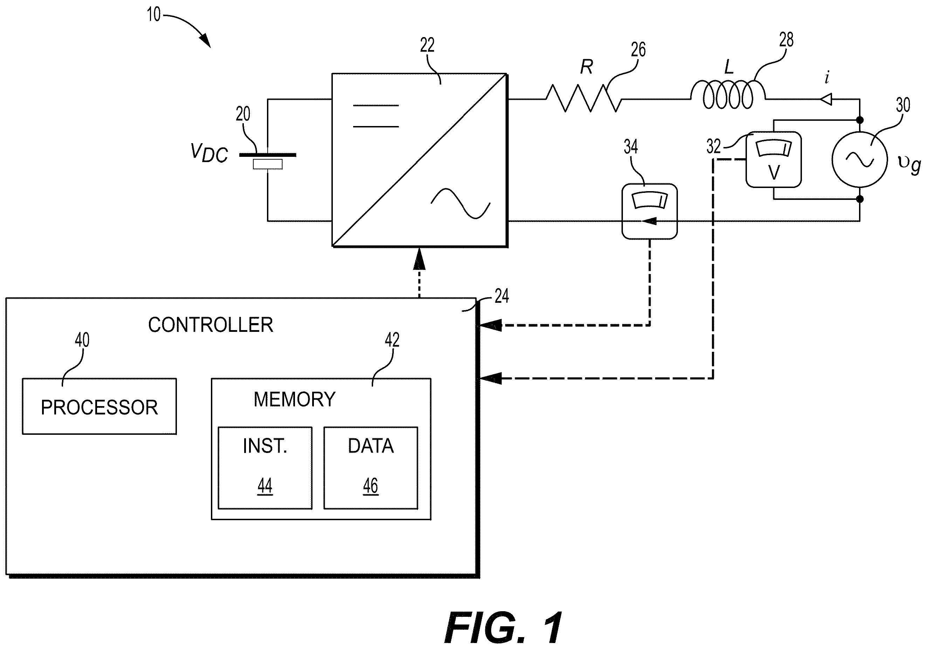

FIG. 1 presents a schematic diagram illustrating a power converter 10 for a single-phase grid-connected inverter with current and voltage sensing. The power converter 10 of FIG. 1 may have a conventional design for converting power between a direct current (DC) energy storage device 20 and an alternating current (AC) grid 30. The DC energy storage device 20 may include, for example, a battery. The DC energy storage device 20 has a DC voltage $V_{DC}$, and the AC grid 30 has a grid voltage $v_g$. The power converter 10 includes an inverter 22 connected directly to the DC energy storage device 20 and providing AC power to the AC grid 30 via a resistor 26 and an inductor 28, which are each connected in series between the inverter 22 and the AC grid 30.

A voltage sensor 32 is connected across the AC grid 30 to measure the grid voltage $v_g$, and a current sensor 34 is configured to measure an AC current i between the inverter 22 and the AC grid 30. A controller 24 is configured to control operation of the inverter 22 and is arranged to receive signals from the voltage sensor 32 and the current sensor 34. The controller 24 may, for example, command one or more switching devices within the inverter 22 to selectively conduct current in order to control power flow between the DC energy storage device 20 and the AC grid 30.

The controller 24 includes a processor 40 coupled to a storage memory 42. The storage memory 42 includes an instruction storage 44 for storing instructions, such as program code for execution by the processor 40. The storage memory 42 also includes data storage 46 for holding data to be used by the processor 40. The data storage 46 may record, for example, values of the parameters measured by the sensors 32, 34 and/or the outcome of functions calculated by the processor 40.

The basic model of grid-connected power systems is illustrated in FIG. 1 where the AC grid 30 is interfaced to a DC energy storage device 20 through an inverter. The interface between the converter and the grid includes filter inductance for two reasons that are exploited in the proposed method:

- Current impeding at transient conditions with high impedance for step-like switching, and consequently,
- Filtering of high frequency switching harmonics.

In photo-voltaic (PV) systems, it is common to add a passive LCL filter or transformer that further improves the inverter output voltage quality. The controller 1) measures the grid voltage, 2) generates synchronous current reference, and 3) tracks the reference with current feedback. Thus, voltage and current sensors are typically required, as shown in FIG. 1. The phase can be determined via a phase-locked loop (PLL), or an open-loop orthogonal-signal generator when the stability of the grid is not of concern.

A controlled power flow may be achieved by integrating a current controller in the d-q frame of reference Id and Iq, equivalently controlling active and reactive power, respectively.

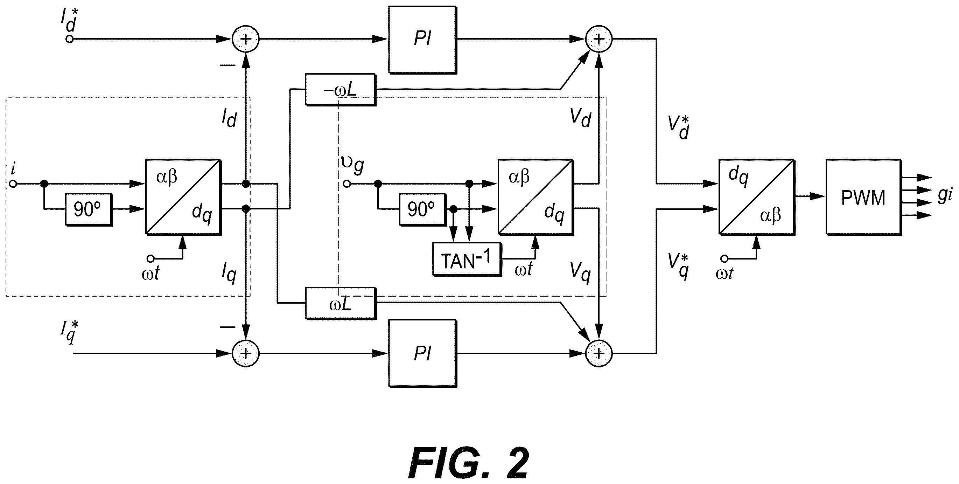

FIG. 2 shows a schematic block diagram of a conventional dq control scheme for grid-connected inverter with cross-axis decoupling, including feed-forward voltage measurement.

Sensing the grid voltage has several potential drawbacks. It may require an additional microcontroller (MCU) ADC port, potentially driving MCU cost up. It often requires a resistive voltage divider and isolated amplifier, to condition the grid's high voltage to MCU-appropriate levels. Finally, it adds more points of failure, impacting the reliability of circuits. Recent developments in control theory may allow for grid-tracking using the current measurement, eliminating the need for voltage sensing. A model-reference-adaptive control (MRAC) based method may provide results similar to conventional voltage sensing in a post-synchronous stage. Voltage estimation may be performed based on an internal model of the filter circuit with a fast PR controller for estimation correction. However, such PRAC and PR methods may rely solely on a controller, which can introduce unpredictable transients during start-up. Many existing designs for voltage-sensor-less control in grid-connected applications rely completely on the robustness of the controller and observer estimation.

The present disclosure introduces a new method that enables grid tracking before energy exchange using discontinuous conduction mode operation with a disturbance-observer-based controller (DOB). A main challenge that a DOB or any controller faces is the performance in transient conditions during start-up which is addressed in the method of the present disclosure by the predetermination of the grid voltage.

## II. VOLTAGE ESTIMATION OPERATING PRINCIPLE

Eliminating the voltage sensor, the only information that the controller can rely on is the current measurement. Thus, a pertinent problem is: how to observe the grid voltage given the current measurement? The present disclosure provides for estimating the grid voltage in two stages: a) a pre-synchronous stage, before energy is exchanged, and b) a post-synchronous stage, during energy exchange.

To achieve grid tracking in the pre-synchronous stage, the present disclosure introduces the concept of switched-impedance.

### A. Switched-Impedance (SWZ)

Switched-impedance (SWZ) is a method that uses the same concept of current-impeding reactance in a Z-source inverter (ZSI). It is a derivative of the discontinuous conduction mode of a converter.

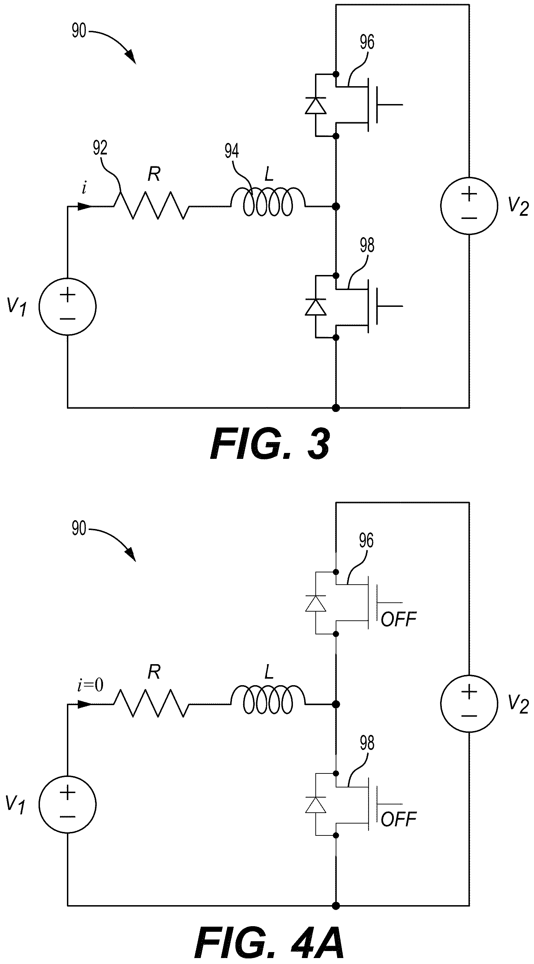

In what follows, the boundaries of the SWZ mode are derived for DC/DC half-bridge converter which are then extended to the DC/AC case in grid-tied converters. Consider the circuit shown in FIG. 3 which is a half-bridge converter 90 interfacing two DC voltage sources (V1 and V2) with R - L impedance. The half-bridge converter 90 includes a resistor 92 in series with an inductor 94 and with a first voltage source $V_1$. An upper field-effect transistor (FET) 96 selectively conducts current between the inductor 94 and a positive terminal of a second voltage source $V_2$. A lower FET 98 selectively conducts current between the inductor 94 and a common node connected to negative terminals of each of the first voltage source $V_1$ and the second voltage source $V_2$. A current i is defined through the series combination of the resistor 92 and the inductor 94.

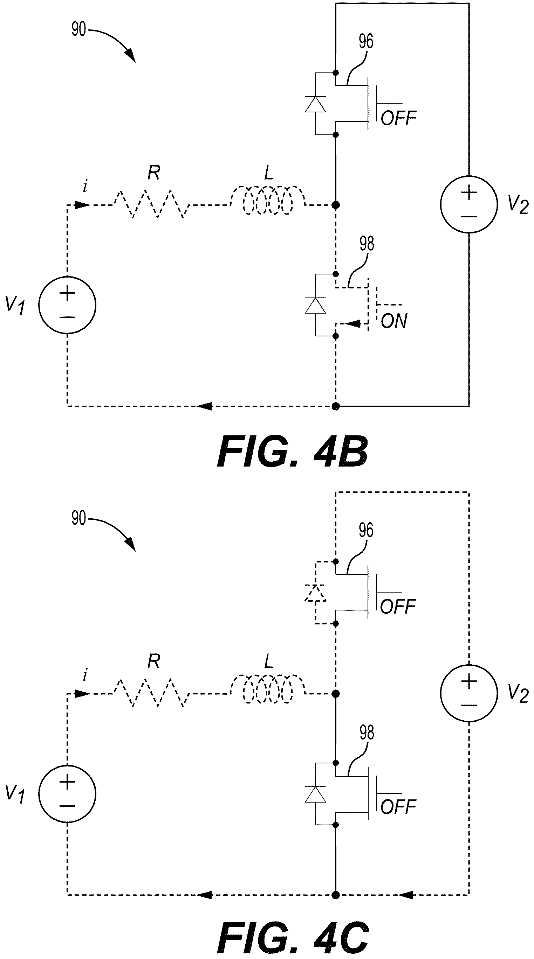

The SWZ operation begins in an idle state S0 with no current flow, as indicated in FIG. 4A. We seek a switch state in which conduction is permitted for current due to source V1, irrespective of source V2. Such a first state S1 is unique and is shown in FIG. 4B. Due to the inductive load, the first state S1 is always followed by a second state S2 in which current is conducted through the reverse diode of the upper switch, as illustrated in FIG. 4C. The idle state S0 condition shown in FIG. 4A may called a "no conduction state"; the first state S1 condition shown in FIG. 4B may be called a "SWZ on-state;" and the second state S2 condition shown in FIG. 4C may be called a "SWZ off-state." Current flow is indicated by dashed lines on FIGs. 4B-4C. For discontinuous conduction, the second state S2 is held until the current i falls back to zero, at which time the idle state S0 begins. The differential equations describing the states S0 - S2 are listed in equation (1):

$$\frac{di}{dt} = \begin{cases} -\dfrac{R}{L}i + V_1 & (S1) \\ -\dfrac{R}{L}i + V_1 - V_2 & (S2) \\ 0 & (S0) \end{cases} \tag{1}$$

Suppose that the system switches with sequence S1 - S2 - S0 - S1, and switching period T. Let D be the duty cycle of the first state S1, and D2 be the duty cycle of the second state S2, such that a final time $t_f$ at which the idle state S0 is reached is described by equation (2), below, and with the origin of time T coinciding with the start of the first state S1.

$$t_f = (D + D_2)T \qquad\qquad (2)$$

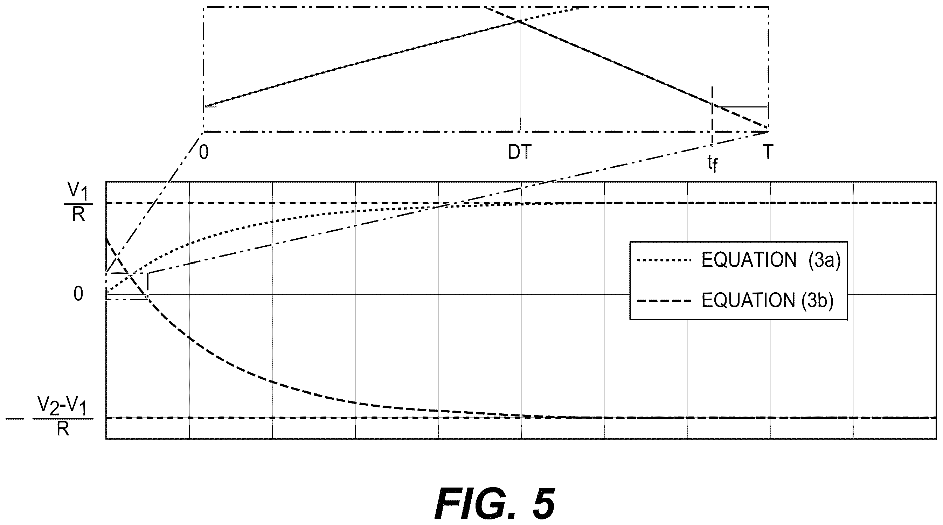

The time-domain solutions can then be expressed as seen in equations (3a - 3c), below, whose piece-wise components are plotted in FIG. 5.

$$i(t) = \begin{cases} \frac{V_1}{R}\left(1 - e^{-\frac{R}{L}t}\right) & (0 \le t \le DT) \quad (3a) \\ i_o e^{-\frac{R}{L}(t-DT)} - \frac{V_2 - V_1}{R}\left(1 - e^{-\frac{R}{L}(t-DT)}\right) & \left(DT \le t \le t_f\right) \quad (3b) \\ 0 & (t_f \le t \le T) \quad (3c) \end{cases}$$

where R is a resistance of the resistor 92 (in ohms), L is an inductance of the inductor 94 (in Henries), DT represents a time when the power converter changes between operating in the first state S1 to operating in the second state S2, and where an initial current $i_0$ is described by equation (4):

$$i_o = i(DT) = \frac{V_1}{R}\left(1 - e^{-\frac{R}{L}DT}\right) \qquad\qquad (4)$$

Equation (4) is the expression of the final current in the first state S1. To determine the time $t_f$ at which the current $i$ reaches zero (i.e. the beginning of the idle state S0), we set the condition $i(t_f) = 0$, which implies equation (5):

$$i_o e^{-\frac{R}{L}(t_f - DT)} - \frac{V_2 - V_1}{R}\left(1 - e^{-\frac{R}{L}(t_f - DT)}\right) = 0 \qquad\qquad (5)$$

Solving equation (5) for $t_f$, equation (6) is attained.

$$t_f = DT + \frac{L}{R}\ln\left[1 + \frac{R}{V_2 - V_1}i_o\right] \qquad\qquad (6)$$

A significant constraint is presented by equation (6) on the logarithmic term. It is known, by definition, that $t_f >$ DT; this can only be true if the logarithmic term is positive, which implies V2 > V1. This is also inferred from the boost structures shown in FIG. 4A - 4C.

The main condition of discontinuous conduction is that the current must always reach the idle state S0 before the end of every switching period. To enforce this condition, we fix all variables and determine the maximum duty cycle $D_{max}$ that enables discontinuous mode. i.e., $t_f < T$, then equations (4) and (5) can be combined to provide inequality (7):

$$DT + \frac{L}{R}\ln\left[1 + \frac{\frac{V_1}{V_2}\left(1 - e^{-\frac{R}{L}DT}\right)}{1 - \frac{V_1}{V_2}}\right] < T \qquad\qquad (7)$$

Inequality (7) has a unique closed-form solution that can be attained after some algebra. The resulting expression is inequality (8):

$$D < D_{\max} = \frac{L}{RT}\ln\left[\frac{e^{\frac{R}{L}T} + r}{1 + r}\right] \qquad\qquad (8)$$

where $r$ is described by equation (9):

$$r = \frac{\dfrac{V_1}{V_2}}{1 - \dfrac{V_1}{V_2}} \tag{9}$$

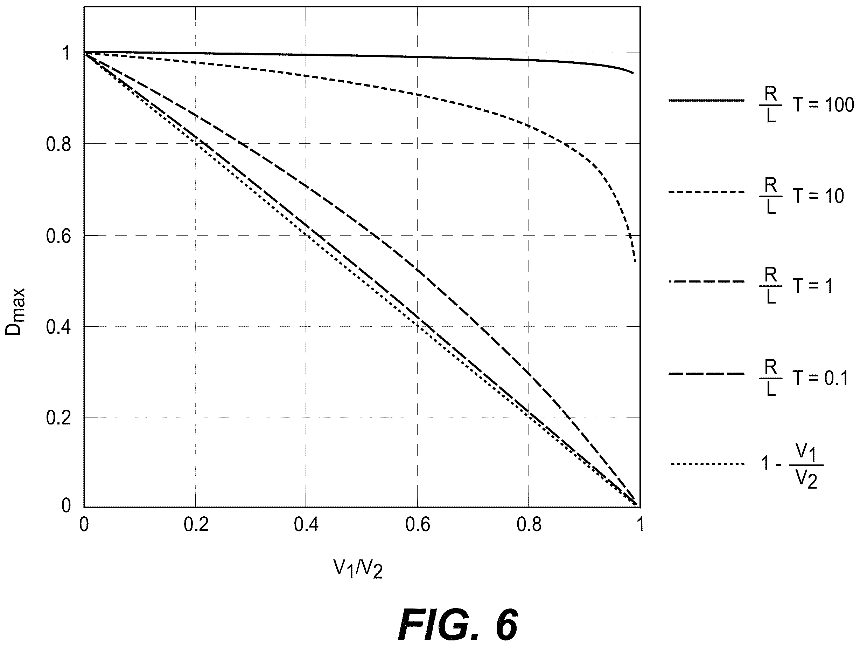

FIG. 6 shows a graph illustrating maximum duty cycle $D_{max}$ vs voltage ratio $\dfrac{V_1}{V_2}$, and for different factor values $\dfrac{R}{L}T$. FIG. 6 includes plots for factor values $\dfrac{R}{L}T = 100; \dfrac{R}{L}T = 10; \dfrac{R}{L}T = 1$; and $\dfrac{R}{L}T = 0.1$.

In the limit $\dfrac{R}{L}T \to 0$, equation (8) simplifies to equation (10):

$$\lim_{\frac{R}{L}T \to 0} D_{\max} = 1 - \frac{V_1}{V_2} \tag{10}$$

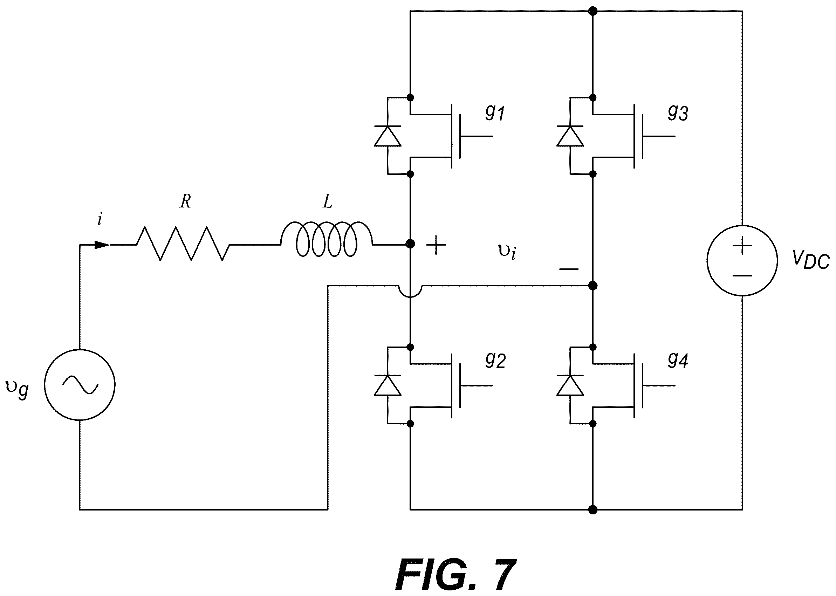

Expressions (8) and (9) are the basis for SWZ operation and indicate that the maximum allowable duty cycle is influenced by two main quantities: $\dfrac{L}{RT}$ and $\dfrac{V_1}{V_2}$. To study the effects of said quantities, the equation in expression (8) is plotted vs $\dfrac{V_1}{V_2}$ for different values of $\dfrac{L}{RT}$ in FIG. 7. Generally, the higher the maximum duty cycle $D_{max}$ is, the more flexible the SWZ operation is for a given target S1 current ($i_o$). FIG. 7 indicates that lower values of $\dfrac{L}{RT}$ and $\dfrac{V_1}{V_2}$ result in higher maximum duty cycle $D_{max}$. With multiple parameters contained in each quantity, the design and optimization of the SWZ operation is flexible yet complex.

It can be shown that the previous derivations hold true for a full-bridge converter, the only difference being that V1 can be bipolar due to the symmetry. Also, note that the additional leg in a full-bridge converter doubles the voltage drop taken by the body diodes.

*B. Pre-Synchronous Stage for Grid-Connected Full-Bridge Inverter*

The concept of SWZ can be employed in a full-bridge (FB) converter to achieve a safe transient start-up by tracking grid voltage before any power is exchanged. One important consideration that must be accounted for in the operation of the grid-connected full-bridge converter is that the grid voltage $v_g$ is sinusoidal; a time-changing waveform. Thus, to deem the change in the grid voltage $v_g$ over the SWZ pulsing period $T$ as negligible, the SWZ pulsing period $T$ must be much smaller than the grid's period ($T << 2\pi/\omega_g$), where $\omega_g$ is the grid's angular frequency. This is not difficult to achieve since most inverters operate at switching frequencies $\approx 100 \times \omega_g$. Consequently, equations (8) and (9) are good enough approximations for the maximum duty cycle of SWZ at a given period, since $\Delta v_g/T \approx 0$.

FIG. 7 shows a grid-connected full-bridge converter circuit. In such case, $D_{max}$ must be determined based on the critical case of grid voltage. FIG. 7 shows that the critical (minimum) $D_{max}$ is the value at which $\dfrac{V_1}{V_2}$ is maximum. Setting $V_1 = V_g = \|V_g{<}\omega t\|$ (amplitude of the grid voltage) and $V_2 = V_{DC}$ with $V_{DC} > V_g$, the value of $D_{max}$ for the grid-connected inverter can be determined. SWZ operation in a full-bridge converter can be achieved by following the same sequence of states S1 - S2 - S0 discussed in the previous section. Table I, below, lists the gate signal configurations required for the SWZ states in a full-bridge converter. The first state S1 has two columns ($S1_U$, $S1_L$) corresponding to two switching patterns that achieve the same state due to symmetry. This can be used to alternate the current path between the upper switches ($g_1$, $g_3$) and lower one ($g_2$, $g_4$) to maintain symmetry in performance over long operation times. Practically, states S0 and S2 can be achieved using a dead time of ($1 - D)T$, where the duty cycle $D$ is described in inequality (8).

TABLE I: The SWZ operation states and the corresponding gate signals for the full-bridge converter topology

| SWZ Operation State | | | | |
|---|---|---|---|---|
| | S0 | $S1_U$ | $S1_L$ | S2 |
| $g_1$ | 0 | 1 | 0 | 0 |
| $g_2$ | 0 | 0 | 1 | 0 |
| $g_3$ | 0 | 1 | 0 | 0 |
| $g_4$ | 0 | 0 | 1 | 0 |

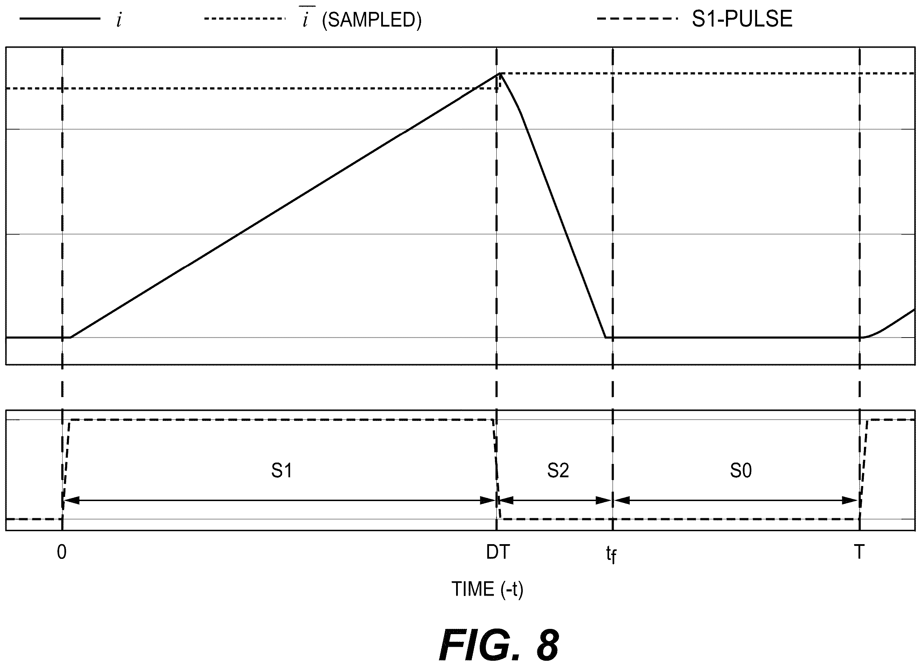

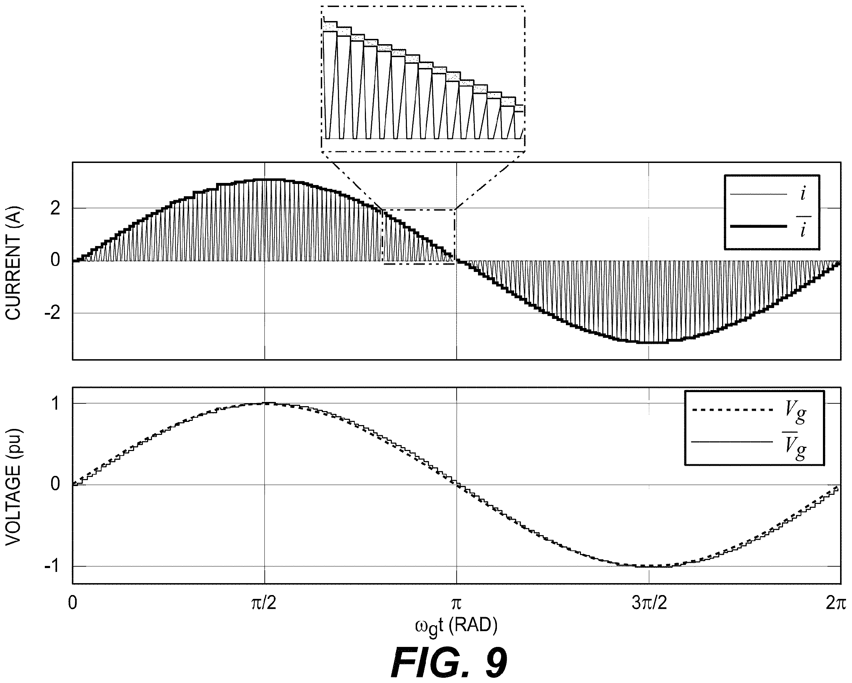

To demonstrate the SWZ operation, FIG. 8 shows a snapshot of simulation results for grid-connected full-bridge converter for a SWZ period $T$. The time axis shown in FIG. 8 is relative to some instance $t$. As the grid voltage approaches the peak value $V_g$, $t_f$ will increase, thus it is important to use a duty cycle $D$ smaller than the critical $D_{max}$ corresponding to $V_g$. The S1 pulse is the gate signal given to the upper or lower switch pairs at a given first state S1. This signal alternates between patterns $S1_U$ and $S1_L$. FIG. 9 shows the SWZ operation over a grid period $2\pi/\omega_g$. In application, the current is sampled at each peak value $i_o$ by synchronizing the ADC trigger with the falling edge of the S1 pulse. The resulting current measurement i is a zero-order held sinusoid that is in sync with the grid voltage. The grid voltage can be retrieved simply using the SWZ factor $Z_{SW}$, where, for every SWZ cycle $n$, as set forth in equation (11):

$$\bar{v}_g[n] = Z_{SW} \times \bar{i}[n] \qquad (11)$$

where $\bar{v}_g[n]$ is the estimated grid voltage of the AC grid during a switched-impedance (SWZ) cycle $n$, $\bar{i}[n]$ is the measured current during the switched-impedance (SWZ) cycle $n$, and $Z_{SW}$ is a switched impedance. The switched impedance factor $Z_{SW}$ is implied by equation (4) and may be determined as set forth in equation (12):

$$Z_{SW} = \frac{R}{1 - e^{-\frac{R}{L}DT}} \qquad (12)$$

The bottom plot of FIG. 9 shows the retrieved voltage using equations (11) and (12). The approximation is accurate and can be used to synchronize with the grid before energy exchange. Note that the simulation was performed using exact values of the circuit parameters. In practice, tolerance on the parameters $L$ and $R$ may cause deviations in equation (11) from the true grid voltage. This, however, does not affect the phase, and the estimation remains synchronous. As shown, the power converter operates many cycles in the pre-synchronous mode to provide a corresponding number of current pulses before changing to operating in the post-synchronous mode.

*C. Post-Synchronous Stage*

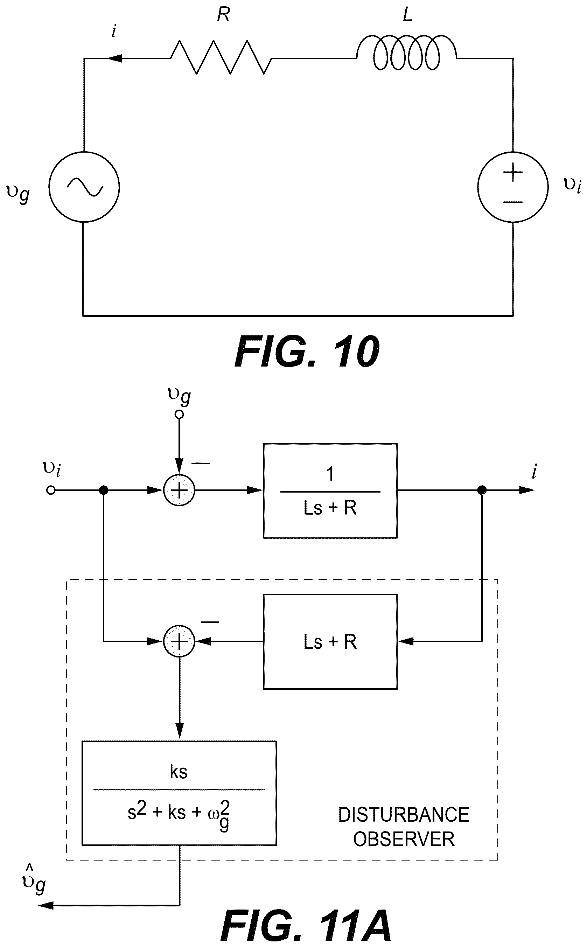

After synchronization with the grid via SWZ, the tracking must be carried out with minimum interruption when energy exchange commences. There are multiple ways to implement this, as describe elsewhere in the present disclosure. An advantage that is presented here is that the pre-synchronous stage allows the controller to detect zero-crossing for a softer start-up. Additionally, the observer can use the pre-synchronous voltage estimation to converge before energy exchange.
We first establish a simplified circuit of the grid-connected converter to be modeled in Laplace domain. FIG. 10 shows the circuit where the FB converter is modeled as a voltage source. According to the law of superposition, the total current in the circuit is the sum of the currents due to $v_g$ and $v_g$. Thus, in Laplace domain, current I(s) is described by equation (13):

$$I(s) = P(s)V_i(s) - P(s)V_g(s) \qquad (13)$$

where the plant of the controlled system P(s) is described by equation (14):

$$P(s) = \frac{1}{Ls + R} \qquad (14)$$

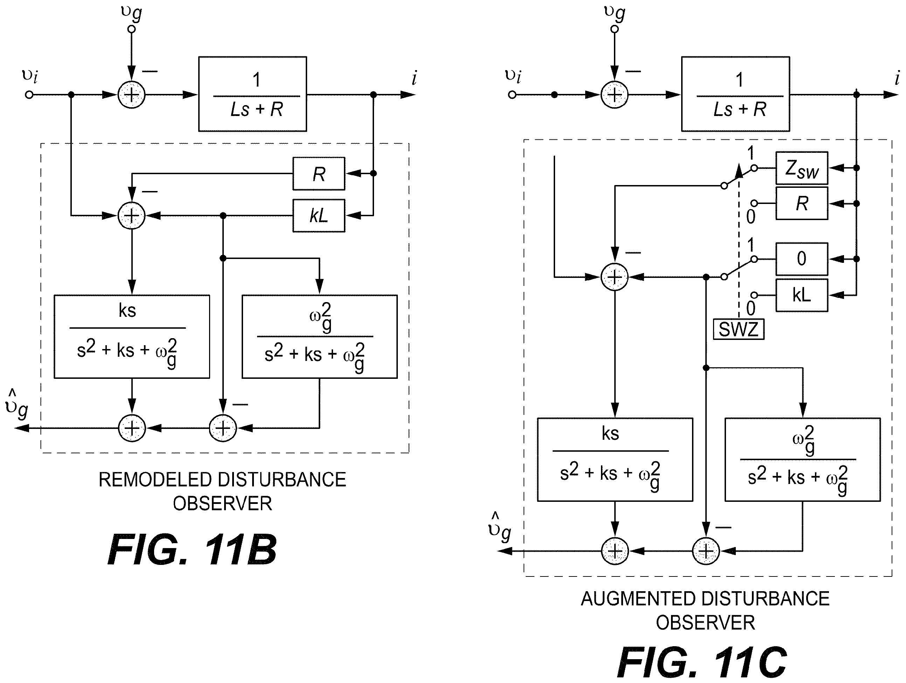

Note that the polarity of current i in FIG. 10 was flipped to follow the convention in literature, where the main current is due to the controlled converter, while the grid is seen as a disturbance. Disturbance observers are usually integrated with a filter that increases the selectivity of the disturbance. FIG. 11A is a system block diagram of the disturbance observer in Laplace domain. The inverse of the plant $P^{-1}(s)$ contains a derivative term that can be difficult to realize digitally. By integrating a second-order low pass filter in the observer, the observer can be remodeled to remove the derivative term. FIG. 11B shows the remodeled DOB that can be digitized given the sampling period. The filter used in this case is a direct-resonant $D(s)$, as set forth in equation (15), that can be coupled or followed by a quadrature signal generator $Q(s)$, as set forth in equation (16), below:

$$D(s) = \frac{ks}{s^2 + ks + \omega_g^2} \qquad (15)$$

$$Q(s) = \frac{k\omega_g}{s^2 + ks + \omega_g^2} \qquad (16)$$

The transfer function in equation (16) can be integrated using the same remodeling method used for equation (15) in FIG. 11B. In order to take full advantage of the pre-synchronous stage allowed by SWZ, the remodeled disturbance observer can be augmented to support the SWZ operation. A SWZ Boolean signal can control if the augmented disturbance observer operates in SWZ or not. This allows the observed grid voltage $\hat{v}_g$ to converge to $v_g$ without unpredictable transients. FIG. 11C shows the final SWZ-augmented observer with SWZ signal that can be fired after an estimated time of convergence $t_c$ (tuned via parameter $k$ in $(D(s),Q(s))$).

As shown, the final SWZ-augmented observer includes a first feedback factor that is multiplied by the current i, and which he changed based on the SWZ signal between a first value equal to times the resistance $R$ when the SWZ signal is de-asserted (during the pre-synchronous mode), and a second value equal to a switched impedance $Z_{SW}$ when the SWZ signal is asserted (during the post-synchronous mode). The final SWZ-augmented observer also includes a second feedback factor that is multiplied by the current i, and is changed based on the SWZ signal between a first value equal to a constant $k$ times the inductance $L$ when the SWZ signal is de-asserted (during the pre-synchronous mode), and a second value equal to zero when the SWZ signal is asserted (during the post-synchronous mode).

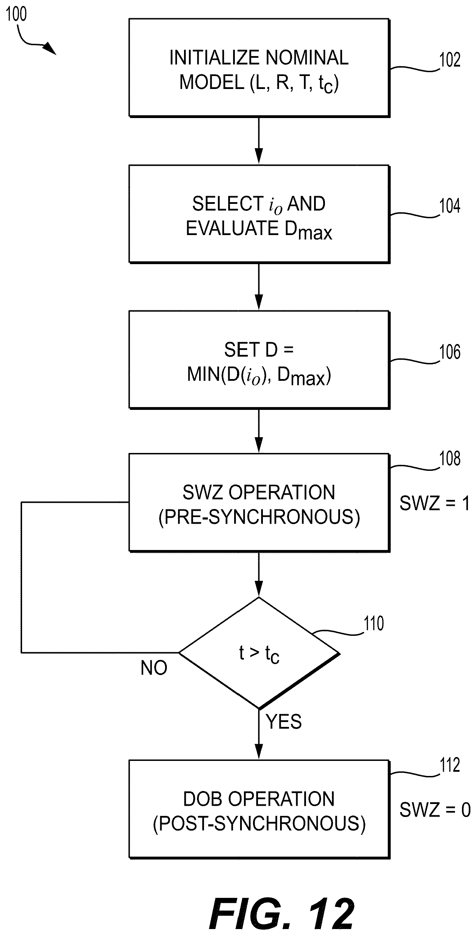

FIG. 12 shows a flow chart illustrating steps in a first method 100 for modeling operation of a power converter for exchanging power with an alternating current (AC) grid.

The first method 100 includes initializing, at 102 a nominal model. Step 102 may include setting values for inductance L, resistance T, cycle time T, and conduction time $t_c$.

The first method 100 also includes selecting, at 104, an output current $i_o$ and evaluating for a maximum duty cycle $D_{max}$.

The first method 100 proceeds to set a duty cycle D as a smaller of: $D(i_o)$, and the maximum duty cycle $D_{max}$

The first method 100 also includes modeling, at 108, operation of the power converter in a switched impedance (SWZ) mode, which may also be called pre-synchronous operation.

The first method 100 also includes waiting, at 110, until an elapsed time $t$ is greater than the estimated time of convergence $t_c$. Until step 110 indicates that elapsed time $t$ is greater than the estimated time of convergence $t_c$, step 110 may return program flow back to step 108. After step 110 indicates that elapsed time $t$ is greater than the estimated time of convergence $t_c$, step 110 may proceed to step 112.

The first method 100 also includes modeling, at 112, operation of the power converter in DOB mode, which may also be called post-synchronous operation. In the DOB mode, a disturbance-observer-based controller (DOB) may be used for controlling operation of the power converter.

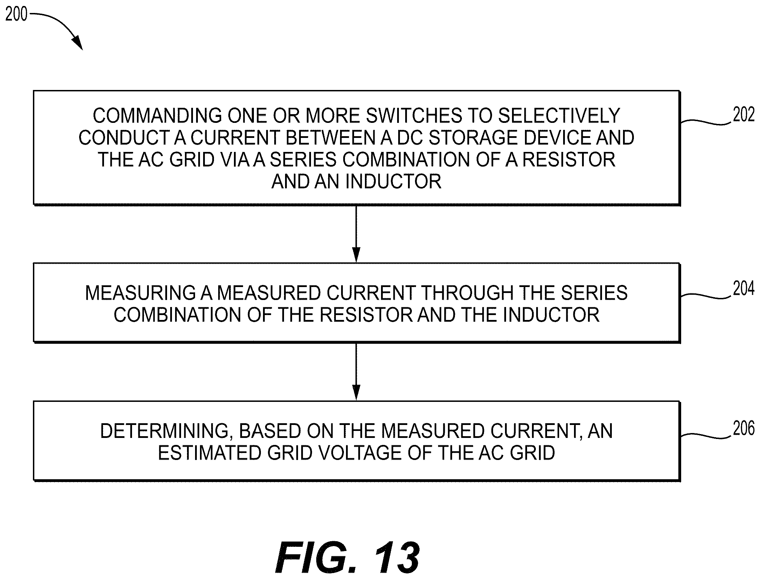

A second method 200 for operating a power converter for exchanging power with an alternating current (AC) grid is shown in the flow chart of FIG. 13. The second method 200 may represent a simplified explanation of the first method 100. The second method 200 may include any or all of the steps of the first method 100. Various steps of the second method 200 can be performed by the controller 24, in accordance with some embodiments of the present disclosure. As can be appreciated in light of the disclosure, the order of operation within the method is not limited to the sequential execution as illustrated in FIG. 13 but may be performed in one or more varying orders as applicable and in accordance with the present disclosure.

The second method 200 includes commanding, at 202, one or more switches to selectively conduct a current between a DC storage device and the AC grid via a series combination of a resistor and an inductor. For example, the processor 40 may execute instructions to cause the controller 24 to operate one or more switches in the inverter 22 to control current flow between the DC energy storage device 20 and the AC grid 30.

The second method 200 also includes measuring, at 204, a measured current through the series combination of the resistor and the inductor. For example, the current sensor 34 may measure the current and transmit a signal to the controller 24 and representing the current through the series combination of the resistor and the inductor.

The second method 200 also includes determining, at 206 and based on the measured current, an estimated grid voltage of the AC grid. For example, the processor 40 may execute instructions for calculating the estimated grid voltage of the AC grid, as set forth in the present disclosure. Determining the estimated grid voltage of the AC grid includes using a first technique to determine the estimated grid voltage while operating the power converter in the pre-synchronous mode. Determining the estimated grid voltage of the AC grid also includes using a second technique, different from the first technique, to determine the estimated grid voltage while operating the power converter in the post-synchronous mode.

Commanding the one or more switches to selectively conduct the current may be based on the estimated grid voltage. Commanding the one or more switches to selectively conduct the current includes operating the power converter in each of: a pre-synchronous mode before energy is exchanged between the DC storage device and the AC grid, and a post-synchronous mode while energy is exchanged between the DC storage device and the AC grid.

In some embodiments, operating the power converter in the pre-synchronous mode includes operating the one or more switches in a discontinuous conduction mode, thereby creating a deterministic relationship between the grid voltage and a current through the series combination of the resistor and the inductor.

In some embodiments, the second technique includes computing the estimated grid voltage while operating the power converter in the post-synchronous mode and using a disturbance observer.

The system, methods and/or processes described above, and steps thereof, may be realized in hardware, software or any combination of hardware and software suitable for a particular application. The hardware may include a general-purpose computer and/or dedicated computing device or specific computing device or particular aspect or component of a specific computing device. The processes may be realized in one or more microprocessors, microcontrollers, embedded microcontrollers, programmable digital signal processors or other programmable devices, along with internal and/or external memory. The processes may also, or alternatively, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine-readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices as well as heterogeneous combinations of processors, processor architectures, combinations of different hardware and software, or any other machine capable of executing program instructions.

Thus, in one aspect, each method described above, and combinations thereof may be embodied in computer executable code that, when executing on one or more computing devices performs the steps thereof. In another aspect, the methods may be embodied in systems that perform the steps thereof and may be distributed across devices in a number of ways, or all of the functionalities may be integrated into a dedicated, standalone device or other hardware. In another aspect, the means for performing the steps associated with the processes described above may include any of the hardware and/or software described above. All such permutations and combinations are intended to fall within the scope of the present disclosure.

The foregoing description is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

**Claims**

**1.** A method of operating a power converter (10) for exchanging power with an alternating current (AC) grid (30), comprising:

commanding one or more switches to selectively conduct a current between a DC storage device (20) and the AC grid (30) via a series combination of a resistor and an inductor;

measuring a measured current through the series combination of the resistor and the inductor; and
determining, based on the measured current, an estimated grid voltage of the AC grid (30);
wherein commanding the one or more switches to selectively conduct the current is based on the estimated grid voltage,
wherein commanding the one or more switches to selectively conduct the current includes operating the power converter (10) in each of: a pre-synchronous mode before energy is exchanged between the DC storage device (20) and the AC grid (30), and a post-synchronous mode while energy is exchanged between the DC storage device (20) and the AC grid (30),
wherein determining the estimated grid voltage of the AC grid (30) includes using a first technique to determine the estimated grid voltage while operating the power converter (10) in the pre-synchronous mode, and
wherein determining the estimated grid voltage of the AC grid (30) includes using a second technique, different from the first technique, to determine the estimated grid voltage while operating the power converter (10) in the post-synchronous mode.

2. The method of Claim 1, wherein the one or more switches are arranged in a half-bridge configuration; or wherein the one or more switches are arranged in a full-bridge configuration.

3. The method of Claim 1 or 2, wherein operating the power converter (10) in the pre-synchronous mode includes operating the one or more switches in a discontinuous conduction mode, thereby creating a deterministic relationship between the grid voltage and the current through the series combination of the resistor and the inductor.

4. The method of any one of Claims 1 to 3, wherein operating the power converter (10) in the pre-synchronous mode includes operating the one or more switches in each of:

a first state with at least one switch of the one or more switches in a conductive state to conduct a charging current from the DC storage device (20) through the series combination of the resistor and the inductor and without conducting the current to the AC grid (30) , and
a second state with each switch of the one or more switches in a non-conductive state, and with a body diode conducting the current between the DC storage device (20) and the AC grid (30) via the series combination of the resistor and the inductor.

5. The method of any one of Claims 1 to 4, wherein the first technique includes computing the estimated grid voltage while operating the power converter (10) in the pre-synchronous mode and in accordance with: $\bar{v}_g[n] = Z_{SW} \times \bar{i}[n]$, where $\bar{v}_g[n]$ is the estimated grid voltage of the AC grid (30) during a switched-impedance (SWZ) cycle $n$, $\bar{i}[n]$ is the measured current during the switched-impedance (SWZ) cycle $n$, and $Z_{SW}$ is a switched impedance and is determined in accordance with: $Z_{SW} = \dfrac{R}{1 - e^{-\frac{R}{L}DT}}$, where R is a resistance of the resistor (in ohms), L is an inductance of the inductor (in Henries), and DT represents a time when the power converter (10) changes between operating in the first state to operating in the second state.

6. The method of any one of Claims 1 to 5, wherein the second technique includes computing the estimated grid voltage while operating the power converter (10) in the post-synchronous mode and using a disturbance observer, preferably wherein the disturbance observer includes a second-order low-pass filter (LPF).

7. The method of Claim 6, further including determining the power converter (10) operating in a switched impedance (SWZ) mode, and wherein the disturbance observer includes at least one term that changes in response to determining the power converter (10) operating in the SWZ mode; and/or
wherein the disturbance observer is configured as an augmented disturbance observer, including a feedback factor that is changed between a first value during the pre-synchronous mode, and a second value during the post-synchronous mode.

8. A power converter (10) system for exchanging power between a direct current (DC) storage device (20) and an alternating current (AC) grid (30), comprising:

a series combination of a resistor and an inductor connected to the AC grid (30);
an inverter (22) including one or more switches configured to selectively conduct a current between the DC storage device (20) and the AC grid (30) via the series combination of a resistor and an inductor;
a current sensor configured to determine a measured current through the series combination of the resistor and the inductor; and
a controller, wherein the controller is configured to:

determine, based on the measured current, an estimated grid voltage of the AC grid (30);
command the one or more switches of the inverter (22) to selectively conduct the current based on the estimated grid voltage and by operating the power converter (10) in each of: a pre-synchronous mode before energy is exchanged between the DC storage device (20) and the AC grid (30), and a post-synchronous mode while energy is exchanged between the DC storage device (20) and the AC grid (30),
wherein determining the estimated grid voltage of the AC grid (30) includes the controller using a first technique to determine the estimated grid voltage while operating the power converter (10) in the pre-synchronous mode, and
wherein determining the estimated grid voltage of the AC grid (30) includes the controller using a second technique, different from the first technique, to determine the estimated grid voltage while operating the power converter (10) in the post-synchronous mode.

9. The system of Claim 8, wherein the one or more switches are arranged in a half-bridge configuration; or wherein the one or more switches are arranged in a full-bridge configuration.

10. The system of Claim 8 or 9, wherein operating the power converter (10) in the pre-synchronous mode includes operating the one or more switches in a discontinuous conduction mode, thereby creating a deterministic relationship between the grid voltage and the current through the series combination of the resistor and the inductor.

11. The system of any one of Claims 8 to 10, wherein operating the power converter (10) in the pre-synchronous mode includes operating the one or more switches in each of:

a first state with at least one switch of the one or more switches in a conductive state to conduct a charging current from the DC storage device (20) through the series combination of the resistor and the inductor and without conducting the current to the AC grid (30) , and
a second state with each switch of the one or more switches in a non-conductive state, and with a body diode conducting the current between the DC storage device (20) and the AC grid (30) via the series combination of the resistor and the inductor.

12. The system of any one of Claims 8 to 11, wherein the first technique includes computing the estimated grid voltage while operating the power converter (10) in the pre-synchronous mode and in accordance with: $\bar{v}_g[n] = Z_{SW} \times \bar{i}[n]$, where $\bar{v}_g[n]$ is the estimated grid voltage of the AC grid (30) during a switched-impedance (SWZ) cycle $n$, $\bar{i}[n]$ is the measured current during the switched-impedance (SWZ) cycle $n$, and $Z_{SW}$ is a switched impedance and is determined in accordance with: $Z_{SW} = \dfrac{R}{1 - e^{-\frac{R}{L}DT}}$, where R is a resistance of the resistor (in ohms), L is an inductance of the inductor (in Henries), and DT represents a time when the power converter (10) changes between operating in the first state to operating in the second state.

13. The system of any one of Claims 8 to 12, wherein the second technique includes computing the estimated grid voltage while operating the power converter (10) in the post-synchronous mode and using a disturbance observer, preferably wherein the disturbance observer includes a second-order low-pass filter (LPF).

14. The system of Claim 13, further including determining the power converter (10) operating in a switched impedance (SWZ) mode, and wherein the disturbance observer includes at least one term that changes in response to determining the power converter (10) operating in the SWZ mode; and/or
wherein the disturbance observer is configured as an augmented disturbance observer, including a feedback factor that is changed between a first value during the pre-synchronous mode, and a second value during the post-synchronous mode.

**FIG. 1**

EP 4 773 457 A1

**FIG. 2**

EP 4 773 457 A1

**FIG. 3**

**FIG. 4A**

**FIG. 4B**

**FIG. 4C**

*FIG. 5*

*FIG. 6*

**FIG. 7**

EP 4 773 457 A1

FIG. 8

**FIG. 9**

**FIG. 10**

**FIG. 11A**

REMODELED DISTURBANCE
OBSERVER

FIG. 11B

AUGMENTED DISTURBANCE
OBSERVER

FIG. 11C

EP 4 773 457 A1

100

INITIALIZE NOMINAL
MODEL (L, R, T, $t_C$) —— 102

SELECT $i_o$ AND
EVALUATE $D_{max}$ —— 104

SET D =
MIN(D($i_o$), $D_{max}$) —— 106

SWZ OPERATION
(PRE-SYNCHRONOUS) —— 108
SWZ = 1

$t > t_C$ —— 110

NO

YES

DOB OPERATION
(POST-SYNCHRONOUS) —— 112
SWZ = 0

# FIG. 12

200

```
┌─────────────────────────────────────────────────────────┐
│ COMMANDING ONE OR MORE SWITCHES TO SELECTIVELY          │
│ CONDUCT A CURRENT BETWEEN A DC STORAGE DEVICE AND       │ ─ 202
│ THE AC GRID VIA A SERIES COMBINATION OF A RESISTOR      │
│ AND AN INDUCTOR                                          │
└─────────────────────────────────────────────────────────┘
                            │
                            ▼
┌─────────────────────────────────────────────────────────┐
│ MEASURING A MEASURED CURRENT THROUGH THE SERIES         │ ─ 204
│ COMBINATION OF THE RESISTOR AND THE INDUCTOR            │
└─────────────────────────────────────────────────────────┘
                            │
                            ▼
┌─────────────────────────────────────────────────────────┐
│ DETERMINING, BASED ON THE MEASURED CURRENT, AN          │ ─ 206
│ ESTIMATED GRID VOLTAGE OF THE AC GRID                   │
└─────────────────────────────────────────────────────────┘
```

## *FIG. 13*

## EUROPEAN SEARCH REPORT

**Application Number**

EP 25 22 5820

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PESREZ-ESTEVEZ DIEGO ET AL: "Grid-Tied Inverter With AC Voltage Sensorless Synchronization and Soft Start", IEEE TRANSACTIONS ON INDUSTRY APPLICATIONS. IEEE SERVICE CENTER, PISCATAWAY, NJ., US, vol. 55, no. 5, 1 September 2019 (2019-09-01), pages 4920-4933, XP011741069, ISSN: 0093-9994, DOI: 10.1109/TIA.2019.2921707 [retrieved on 2019-08-21] * the whole document * ----- | 1-14 | INV. H02J3/32 |
| X | HE YUCHEN ET AL: "Self-Synchronized Startup for Voltage Sensorless Grid-Tied Inverters", 2024 IEEE KANSAS POWER AND ENERGY CONFERENCE (KPEC) IEEE, 25 April 2024 (2024-04-25), pages 1-6, XP034702188, DOI: 10.1109/KPEC61529.2024.10676142 [retrieved on 2024-09-18] * the whole document * ----- | 1,8 | |

**TECHNICAL FIELDS SEARCHED (IPC)**

H02J

The present search report has been drawn up for all claims

| Place of search | Date of completion of the search | Examiner |
|---|---|---|
| Munich | 20 April 2026 | Pavlosyuk, Mikhail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................
& : member of the same patent family, corresponding document

EPO FORM 1503 03.82 (P4C01)